# EUROPÄISCHE PATENTSCHRIFT

(11) **EP 3 155 278 B1**
(45) Veröffentlichungstag und Bekanntmachung des Hinweises auf die Patenterteilung: **12.08.2020**
(21) Anmeldenummer: 15733339.4
(22) Anmeldetag: 03.06.2015
(51) Int. Cl.: F16D 13/75

(54) **SPINDELBETRIEB FÜR EINE WEGGESTEUERTE NACHSTELLEINRICHTUNG UND REIBKUPPLUNG MIT EINER DERARTIGEN NACHSTELLEINRICHTUNG**
SPINDLE-TYPE ACTUATOR FOR A DISTANCE-CONTROLLED ADJUSTMENT DEVICE, AND FRICTION CLUTCH COMPRISING AN ADJUSTMENT DEVICE OF SAID TYPE
ENTRAÎNEMENT À BROCHE DESTINÉ À UN DISPOSITIF D'AJUSTEMENT À TRAJECTOIRE COMMANDÉE ET ACCOUPLEMENT À FRICTION COMPORTANT UN TEL DISPOSITIF D'AJUSTEMENT

(30) Priorität: 10.06.2014 DE 102014211035
(43) Veröffentlichungstag der Anmeldung: 19.04.2017
(73) Patentinhaber: Schaeffler Technologies AG & Co. KG, 91074 Herzogenaurach (DE)
(72) Erfinder: FINKENZELLER, Marc, 77723 Gengenbach (DE)
(86) Internationale Anmeldenummer: PCT/DE2015/200344
(87) Internationale Veröffentlichungsnummer: WO 2015/188822

(56) Entgegenhaltungen:
- DE-A1-102011 087 994
- DE-A1-102012 205 073
- DE-A1-102013 207 695

## Beschreibung

Die vorliegende Erfindung betrifft einen Spindeltrieb für eine weggesteuerte Nachstelleinrichtung gemäß dem Oberbegriff des Patentanspruchs 1. Insbesondere betrifft die Erfindung einen Spindeltrieb für eine weggesteuerte Nachstelleinrichtung, aufweisend zumindest die folgenden Komponenten:
- eine Spindelwelle mit einem Schneckentrieb;
- eine Spindelmutter, die mittels des Schneckentriebs der Spindelwelle infolge einer Verdrehung der Spindelwelle translatorisch bewegbar ist;
- ein Antriebsritzel zum Antreiben der Spindelwelle;
- eine Aufnahme für die Spindelwelle, die die Spindelwelle axial fixiert; und
- ein Übertragungselement, welches dazu vorgesehen ist, eine translatorische Bewegung der Spindelmutter auf einen um eine quer zur Spindelwelle ausgerichtete Rotationsachse verdrehbaren Nachstellring zu übertragen.
Ferner betrifft die Erfindung eine weggesteuerte Nachstelleinrichtung mit einem derartigen Spindeltrieb und eine Reibkupplung mit einer derartigen weggesteuerten Nachstelleinrichtung.

Weggesteuerte Nachstelleinrichtungen sind dazu vorgesehen, in sogenannten Reibpaketen, die zumindest aus einer Anpressplatte, einer korrespondierenden Reibscheibe und einem auf der Reibscheibe angeordneten Reibbelag bestehen, eine verschleißbedingte Veränderung des Abstandes zwischen der Anpressplatte und der korrespondierenden Reibscheibe beziehungsweise des Reibbelages, zu kompensieren. Die weggesteuerte Nachstelleinrichtung verhindert eine Verlängerung des Einrückweges über die Lebensdauer einer Kupplung.

Aus dem Fahrzeugbau sind Kupplungseinrichtungen bekannt, die eine Nachstelleinrichtung aufweisen, die im Verschleißfall ein Antriebsritzel betätigt, um über einen Spindeltrieb einen drehbaren Verstellring in Umfangsrichtung derart zu verschieben, dass ein verschleißbedingter Abstand zwischen Anpressplatte und Reibbelag kompensiert wird.

Aus DE 10 2012 201 096 A1 ist eine Kupplungsvorrichtung mit zumindest einer in axialer Richtung ein- und ausrückbaren Drehmomentübertragungseinrichtung bekannt, die eine Verschleißnachstelleinrichtung aufweist. Ein Spindeltrieb kann über ein Antriebsritzel betätigt werden, sodass über einen Eingriff ein Nachstellring entsprechend der fortschreitenden Abnutzung nachgestellt werden kann.

Aus DE 10 2009 032 332 A1 ist eine Nachstelleinrichtung bekannt, die ebenfalls über einen Spindeltrieb die Nachstellung eines Nachstellrings gewährleistet, wobei der Eingriff in den Nachstellring von einer passenden Spindelmutter bewerkstelligt wird, die auf der Spindel mit entsprechendem Antrieb eines Spindelritzels bewegbar gelagert ist.

Aus DE 10 2008 019 947 A1 ist eine selbstnachstellende Reibkupplung bekannt, bei der ebenfalls ein Spindeltrieb zur Nachstellung eines Nachstellrings eingesetzt wird. Dabei wird die sich in Abhängigkeit des Abnutzungsgrades bewegende Mutter mit einem Ansatz eines Übertragungselementes gekoppelt, welches parallel zum Nachstellring in Umfangsrichtung verläuft und mit diesem verbunden ist.

Die Lehre des Stands der Technik, wie sie in den gewürdigten Dokumenten zum Ausdruck kommt, hat sich in der Vergangenheit bewährt. Jedoch verlangt der heutige Kupplungsbau nicht nur eine Gewährleistung vorteilhafter Optionen, sondern auch eine kosteneffiziente Herstellung. Insbesondere hat sich herausgestellt, dass eine Spindelmutter mit einer formschlüssigen Kopplung in Form einer Nase Nachteile mit sich bringt. Zum einen ist diese Spindelmutter mit Nase in der Herstellung aufwändig und ist ferner aufgrund der zusätzlichen, spanenden Bearbeitung kostenintensiv. Eine in die Anpressplatte gefräste Nut, zur Aufnahme eines Muttermitnehmers, würde die Anpressplatte nachteilhafterweise schwächen.

Ferner hat sich die Verbindung des Übertragungselementes mit dem Nachstellring als problematisch erwiesen. Aufgrund der Verbindung zum Nachstellring ist eine Vormontage einer Spindeltriebaufnahme nicht möglich, was die Montage am Band aufwändiger und teurer macht.

Aus der DE 10 2011 087 994 A1 ist ein Spindeltrieb für eine weggesteuerte Nachstelleinrichtung bekannt, der auf den Oberbegriff des Patentanspruchs 1 lesbar ist.

Der Erfindung liegt die Aufgabe zugrunde einen Spindeltrieb für eine weggesteuerte Nachstelleinrichtung anzugeben, der die Herstellung vereinfacht und die Kosten reduziert ohne andere Bauteile einer Reibkupplung zu schwächen oder andere Nachteile in Kauf nehmen zu müssen.

Die Aufgabe wird durch einen Spindeltrieb für eine weggesteuerte Nachstelleinrichtung gemäß Patentanspruch 1 gelöst. Des Weiteren wird die Aufgabe gelöst durch eine weggesteuerte Nachstelleinrichtung für eine Reibkupplung gemäß Patentanspruch 5, eine Reibkupplung gemäß Patentanspruch 6 und einem Kraftfahrzeug gemäß Patentanspruch 7.

Dank der Erfindung kann die Spindelmutter nunmehr ohne Mitnehmer ausgeführt werden, sodass die zusätzliche, spanende Bearbeitung der Anpressplatte für die Verdrehsicherung der Spindelmutter entfallen kann. Vorteilhafterweise ist die Spindelmutter mit zwei Flanken ausgeführt, von denen sich wenigstens eine der Flanken an dem Übertragungselement abstützt. Dabei kann das Übertragungselement vorteilhafterweise als Zugband ausgeführt sein. Der mit der Spindelmutter interagierende Teil des Übertragungselementes kann vorteilhafterweise als eine aus dem Übertragungselement ausgeprägte Lasche gebildet sein.

Dadurch dass der Mitnehmer der Spindelmutter entfällt, können Standardmuttern als Spindelmuttern verwendet werden, die somit den Ausschuss reduzieren und eine Entfernung der Spindelmutter von der Spindelwelle ermöglicht ohne dass Sperrklinken dabei geschädigt würden.

Des Weiteren erlaubt die Erfindung eine Vormontage der weggesteuerten Nachstelleinrichtung. Die Verbindung von Nachstellring und Übertragungselement erfolgt dabei formschlüssig über den Zuganker, der an einem Ende des Übertragungselementes ausgebildet ist.

Vorteilhafterweise ist an einem axial fixierten Bauteil einer Reibkupplung, insbesondere einem Kupplungsdeckel, eine befestigbare Antriebsklinke zum weggesteuerten Antreiben des Antriebsritzels vorgesehen. Alternativ kann das Antriebsritzel auch mit einem Riementrieb, einem Kettentrieb oder dergleichen angetrieben werden.

Bei einer vorteilhaften Ausführungsform ist der Zuganker in wenigstens einer nicht betriebsgemäßen Anordnung des Übertragungselements in die Ausnehmung einlegbar. Dabei kann der Zuganker vorteilhafterweise bereits in eine weggesteuerte Nachstelleinrichtung oder einen Spindeltrieb eingebaut sein. Nachstelleinrichtung oder Spindeltrieb können vorinstalliert werden, wobei eine Antriebsklinke mit dem Antriebsritzel und das Übertragungselement mit dem Nachstellring verbunden werden müssen.

Eine nicht betriebsgemäße Anordnung des Übertragungselements kann beispielsweise dann vorliegen, wenn das Übertragungselement im Wesentlichen in Axialrichtung, das heißt, parallel zur Rotationsachse der Kupplung ausgerichtet ist. Eine betriebsgemäße Anordnung ist beispielsweise eine in Umfangsrichtung verlaufende Anordnung des Übertragungselements am Nachstellring entlang. Daran ist vorteilhaft, dass zum einen das Übertragungselement unter Drehzahl, das heißt, unter der Einwirkung einer Fliehkraft, nicht aus der Ausnehmung rutschen kann, aber dennoch eine leichte Installation des Spindeltriebs beziehungsweise der Nachstelleinrichtung ermöglicht.

Bei einer vorteilhaften Ausführungsform verläuft bei einer betriebsgemäßen Anordnung das Übertragungselement in Umfangsrichtung entlang des Nachstellrings und bei einer nicht-betriebsgemäßen Anordnung in Axialrichtung der Rotationsachse oder in einer Radialrichtung. Dabei ist wichtig, dass bei einer nicht-betriebsgemäßen Anordnung eine Einfädelung eines Endes, insbesondere des Zugankers, des Übertragungselementes in den Nachstellring möglich ist, aber bei einer betriebsgemäßen Anordnung eine Einfädelung - und damit die mögliche Loslösung bei Fliehkraft - nicht unterstützt wird. Dazu kann der Zuganker entsprechend ausgeführt werden, wobei Biegungen und die Ausbildung eines als T-Stück ausgeformten Zugankers vorgenannte Vorteile durchaus umsetzen können.

Bei einer vorteilhaften Ausführungsform ist eine Axialbreite des Zugankers kleiner als eine in Umfangsrichtung verlaufende Ausnehmungslänge der Ausnehmung. Damit kann gewährleistet werden, dass bei einer nicht betriebsgemäßen Anordnung der Zuganker in die Ausnehmung eingeführt werden kann. Ferner muss die gewählte Ausnehmungslänge in der anschließenden betriebsgemäßen Anordnung dazu führen, dass ein Formschluss mit der Ausnehmung hergestellt wird. Dabei kann der Zuganker ein, zwei oder mehrere Enden aufweisen, die den Nachstellring hintergreifen.

Bei einer vorteilhaften Ausführungsform ist eine in Axialrichtung der Rotationsachse verlaufende Ausnehmungsbreite der Ausnehmung größer als eine Plattenstärke eines Ausgangswerkstücks des Übertragungselementes. Das Übertragungselement kann vorteilhafterweise aus einem plattenartigen Werkstück gefertigt sein, welches beispielsweise aus einem Metall, insbesondere Blech, besteht. Dabei kann das Übertragungselement als Zugband ausgeführt sein. Die Plattenstärke der als Ausgangswerkstücke verwendeten Blechplatten kann somit für die Bemaßung der Ausnehmung berücksichtigt werden, indem die Ausnehmungsbreite in Axialrichtung der Rotationsachse in der genannten Axialrichtung eine Passung zulässt. Durch beispielsweise eine anschließende Rotation nach der Passung durch die Ausnehmung kann der Zuganker in die formschlüssige, betriebsgemäße Anordnung gebracht werden. Daran ist vorteilhaft, dass kalt formbares Material zur Herstellung des Übertragungselements, insbesondere als Zugband, verwendet werden kann.

Bei einer vorteilhaften Ausführungsform weist wenigstens ein Ankerende des Zugankers bei betriebsgemäßer Anordnung des Übertragungselements in eine Axialrichtung der Rotationsachse. Durch die Ausbildung des Ankerendes kann die Größe des Formschlusses beziehungsweise die Art des Hintergriffs des Nachstellrings optimal ausgebildet werden. Ferner ist durch die Anzahl der Ankerenden der Formschluss weiter zu verbessern, wobei deren Position und Länge eine Rolle spielen.

Bei einer vorteilhaften Ausführungsform weisen wenigstens zwei Ankerenden des Zugankers bei betriebsgemäßer Anordnung des Übertragungselements in unterschiedliche Axialrichtungen der Rotationsachse. Dabei bildet das Ende des Zugankers ein T-Stück aus, welches sich hervorragend dazu eignet, nach einer Einbringung des Zugankers in die Ausnehmung eine 90 Grad-Drehung zu vollziehen und damit einen Formschluss herzustellen. Durch die Abstützung auf zwei axialen Seiten des Nachstellrings ist auch eine Verkantung des Übertragungselementes, auch bei großer Fliehkraft, nicht zu erwarten.

Bei einer vorteilhaften Ausführungsform bildet die Ausnehmung ein teilweise oder vollständig umrandetes Loch im Nachstellring aus. Ist das Loch vollständig umrandet, so kann man von einem Fenster sprechen, welches für das Einpassen des Zugankers vorgesehen ist. Das Fenster bildet auch die stabilere Ausführungsform. Ein nur teilweise umrandetes Loch im Nachstellring bildet eine Ausnehmung, die für eine schnelle und einfache Installation des Spindeltriebs beziehungsweise der Nachstelleinrichtung vorgesehen ist. Dabei ist es möglich, dass das Übertragungselement bereits in Umfangsrichtung orientiert ist und axial lediglich (gegebenenfalls zusammen mit dem Spindeltrieb) in den Nachstellring eingelegt wird. Erst bei einer Zugkraftanwendung wird der Zuganker durch seinen Hintergriff in der Ausnehmung ausreichend fixiert, um nicht durch die teilweise axial geöffnete Ausnehmung während des Betriebes herauszufallen.

Bei einer vorteilhaften Ausführungsform einer weggesteuerten Nachstelleinrichtung für eine Reibkupplung weist dieselbe zumindest die folgenden Komponenten auf:
- einen verdrehbaren Nachstellring mit zumindest einer ersten Rampe;
- ein Gegenelement, wie zum Beispiel eine Anpressplatte, mit zumindest einer zweiten Rampe, wobei das Gegenelement und der Nachstellring mit ihren jeweiligen Rampen aufeinander gesetzt eine Gesamthöhe bilden, wobei die Gesamthöhe mittels eines Verdrehens des Nachstellrings mittels der zumindest einen ersten Rampe und der zumindest einen zweiten Rampe veränderbar ist; und
- ein erfindungsgemäßer Spindeltrieb, wobei mittels einer translatorischen Bewegung der Spindelmutter und dem Übertragungselement der Nachstellring verdrehbar ist.

Bei einer vorteilhaften Ausführungsform weist die Reibkupplung mit einer Rotationsachse zu den lösbaren Verbindungen einer Antriebswelle mit einem Antriebsstrang zumindest die folgenden Komponenten auf:
- zumindest ein Reibpaket mit zumindest einer Anpressplatte und zumindest einer korrespondierenden Reibscheibe, wobei zwischen der zumindest einen Anpressplatte und der zumindest einen korrespondierenden Reibscheibe zumindest ein verschleißbarer Reibbelag angeordnet ist und wobei über das Reibpaket im angepressten Zustand mittels des zumindest einen Reibbelags ein Drehmoment übertragbar ist; und
- zumindest eine weggesteuerte Nachstelleinrichtung gemäß der Erfindung, die dazu eingerichtet ist, eine Veränderung eines Abstandes zwischen der zumindest einen Anpressplatte und der zumindest einen korrespondierenden Reibscheibe bei einer abnehmenden Gesamtdicke des zumindest einen Reibbelags auszugleichen.

Bei einer vorteilhaften Ausführungsform weist ein Kraftfahrzeug eine Antriebseinheit mit einer Abtriebswelle, einen Antriebsstrang und eine Reibkupplung gemäß der Erfindung auf.

Weitere vorteilhafte Ausbildungen und Weiterbildungen der Erfindung werden in der Figurenbeschreibung und/oder den Unteransprüchen angegeben. Im Folgenden wird die Erfindung anhand der in den Figuren angegebenen Ausführungsbeispiele weiter beschrieben und erläutert. Es zeigen:
- Fig. 1: eine Baugruppe einer Reibkupplung mit einer weggesteuerten Nachstelleinrichtung basierend auf einem Spindeltrieb,
- Fig. 2: den Spindeltrieb aus Fig. 1 mit dem Nachstellring,
- Fig. 3: das als Zugband ausgeführte Übertragungselement der Fig. 1 und 2,
- Fig. 4: das Übertragungselement aus Fig. 1 im formschlüssigen Hintergriff mit dem Nachstellring.
- Fig. 5: das Übertragungselement mit Spindelmutter, und
- Fig. 6: eine radiale Schnittdarstellung durch eine Reibkupplung mit der Baugruppe aus Fig. 1.

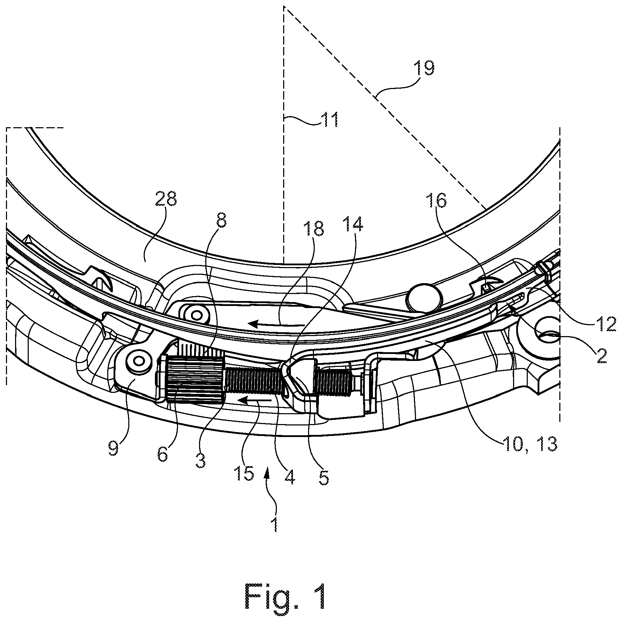

Fig. 1 zeigt eine Baugruppe einer Reibkupplung, die einen Spindeltrieb in einer weggesteuerten Nachstelleinrichtung beinhaltet. Derartige Baugruppen werden in Einfach- oder Doppelkupplungen verwendet, wie sie in Antriebssträngen von Fahrzeugen zu finden sind.

Der Nachstellring 12 kann in Nachstellrichtung 18 verschoben werden, sodass der Abstand zwischen Anpressplatte und Reibbelag bei gegebenem Verschleiß entsprechend anpassbar ist.

Die Aufnahme 9 bildet eine Grundplatte, auf der der Spindeltrieb 1 installiert, beziehungsweise aufgenommen ist. Bei der Installation der Aufnahme 9 zusammen mit dem Spindeltrieb 1, wird die Aufnahme 9 zwischen den Nachstellring 12 und die Anpressplatte 28 gebracht und befestigt, insbesondere vernietet. Daran ist vorteilhaft, dass die Aufnahme 9 bei der Vorinstallation als Grundplatte dienen kann und die Spindelwelle 3 mit dem Antriebsritzel 6 in der Aufnahme 9 vorinstalliert werden kann, genauso wie auch die Sperrklinke 8. Auch die Spindelmutter 5, die in Bewegungsrichtung 15 verstellbar ist, und das Übertragungselement 10 sind bereits in die Baugruppe der Aufnahme 9 integriert, beziehungsweise vorinstalliert. Somit kann die bestückte Aufnahme 9 unter Berücksichtigung der Etablierung des Hintergriffs des Zugankers 16 in der Ausnehmung 2 des Nachstellrings 12 und unter Berücksichtigung der Etablierung einer Wechselwirkung mit einer nicht abgebildeten Antriebsklinke und dem Antriebsritzel 6 am Kupplungsdeckel oder einem anderen Kupplungsbauteil befestigt werden.

Vorteilhafterweise ist die Anpressplatte 28 nicht unnötigerweise durch Formschlusselemente oder Nuten für den Spindeltrieb 1 versehen, womit ein Herstellungsschritt eliminiert und die Anpressplatte 28 stabilisiert ist.

Der Nachstellring 12 bewegt sich in Nachstellrichtung 18, die mit der Umfangsrichtung um die Rotationsachse 11 der Kupplung zusammenfällt. Mit fortschreitendem Verschleiß wird über die Antriebsklinke das Antriebsritzel 6 bewegt, sodass die Spindelwelle 3 gedreht wird. Aufgrund des ersten Flansches 14 wird die Spindelmutter 5 drehgesichert, sodass sie der Drehung der Spindelwelle 3 nicht folgen kann, sondern lediglich in Bewegungsrichtung 15 an der Spindelwelle 3 entlang wandert. Durch diese sukzessive Wanderbewegung in Abhängigkeit des Verschleißes des Reibbelages wird über den ersten Flansch 14 eine Zugkraft auf das Übertragungselement 10 ausgeübt, die entlang des Mittelstücks 13 geleitet, bis zum Zuganker 16 gelangt und der Zuganker 16 aufgrund seines Hintergriffs in der Ausnehmung 2 eine Kraftübertragung auf den Nachstellring 12 gewährleistet. Der Nachstellring 12 bewegt sich somit in Abhängigkeit des Verschleißes in Richtung der Nachstellrichtung 18.

Vorteilhafterweise ist das Übertragungselement 10 als Zugband ausgeführt, welches aus Blech gefertigt ist. Zu dessen Herstellung wird zunächst ein Stanzvorgang vorgenommen, der in Kombination mit einigen nachträglichen Kaltumformungen dann zur Ausbildung des ersten Flansches 14 und des Zugankers 16 führt, sowie eine leichte Biegung des Mittelstücks 13 verursacht.

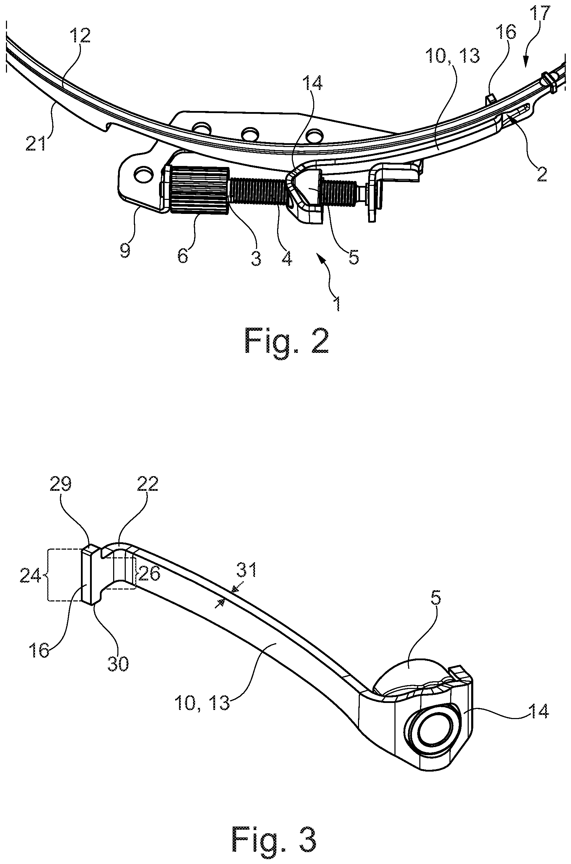

Fig. 2 zeigt eine unbefestigte, aber bestückte Aufnahme 9 in betriebsgemäßer Position zum Nachstellring 12. Vorteilhafterweise kann die Aufnahme 9 mit installiertem Übertragungselement 10 in einer Axialausrichtung an die Ausnehmung 2 herangeführt werden, sodass der Zuganker 16 des Übertragungselementes 10 durch die Ausnehmung 2 hindurch reicht. Anschließend kann in einer Drehbewegung die Aufnahme 9 in Richtung des in Umfangsrichtung verlaufenden Nachstellring 12 bewegt werden, wobei ein Teil der Aufnahme 9 unter den Nachstellring 12 bewegt wird. Dies bedeutet, dass nach der Einführung des Zugankers 16 in die Ausnehmung 2 lediglich eine Drehung von ungefähr 90 Grad erforderlich ist, um das Übertragungselement 10 zusammen mit der Aufnahme 9 und dem gesamten Spindeltrieb 1 betriebsgemäß anzuordnen. Nach dem gezeigten Herstellungsschritt folgt eine Befestigung der Aufnahme 9 inklusive Spindeltrieb 1 mittels Nieten oder Schrauben.

Fig. 3 zeigt das Übertragungselement 10 zusammen mit der Spindelmutter 5. Die Spindelmutter 5 ist im abgerundeten, ersten Flansch 14 derart gehalten, dass eine Drehung um die nicht abgebildete Spindelwelle 3 (siehe Fig. 1 oder 2) unterbunden wird. Der erste Flansch 14 hat ferner die Funktion die Zugkraft der Spindelmutter 5 über das Zwischenstück 13 auf den Zuganker 16 zu übertragen, der nach einer Biegung 22 als T-Endstück ausgebildet ist. Aufgrund der T-Form weist der Zuganker 16 zwei Ankerenden 29,30 auf, die für den Hintergriff und damit für den Formschluss mit dem Nachstellring 12 in der Ausnehmung 2 eingesetzt werden.

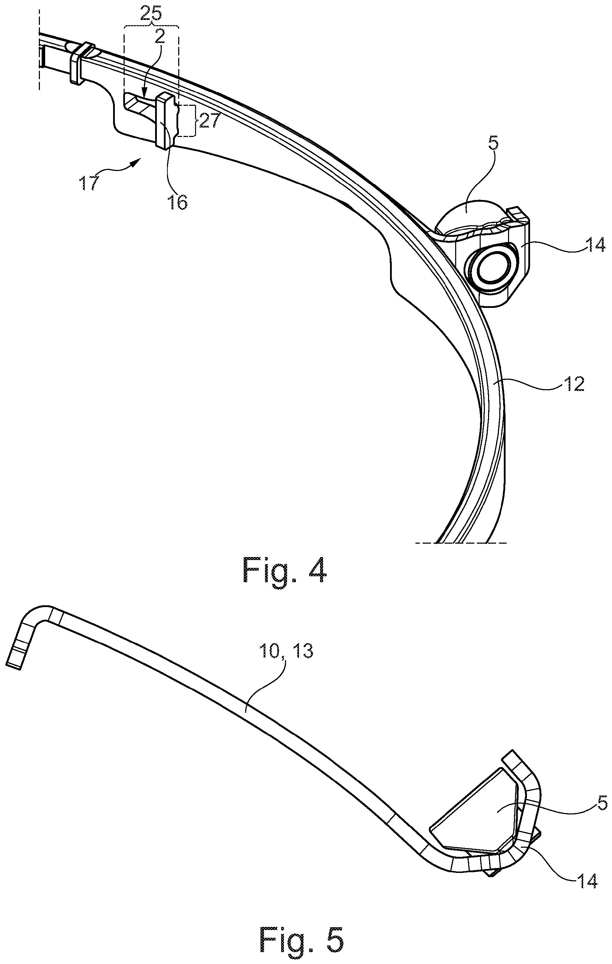

Die Axialbreite 26 des Zugankers 16 muss hierbei zumindest an einer Stelle in der Ausnehmung 2 einliegen können, sodass das Übertragungselement 10 über eine Drehbewegung von 90 Grad in die betriebsgemäße Position zu bringen ist. Des Weiteren muss die Axialbreite 24, die durch die beiden Ankerenden 29,30 definiert ist, größer sein als die Ausnehmungsbreite 27, wie sie in Fig. 4 gezeigt ist. Die Ausnehmungsbreite 27 ist eine Eigenschaft der Ausnehmung 2, die zum einen die Drehinstallation des Übertragungselementes 10 sicherstellt, aber auch den Hintergriff durch den Zuganker 16 gewährleistet. Daran ist vorteilhaft, dass keine feste Verbindung, wie zum Beispiel eine Niet- oder Schraubverbindung, erforderlich ist, die den Herstellungsprozess erheblich komplizieren würde. Auf die gezeigte Weise ist es jedoch möglich, dass das Übertragungselement 10 alleine oder in Zusammenhang mit dem Spindeltrieb 1 auf einfache Weise eingelegt wird, um betriebsgemäß zu funktionieren.

Vorteilhafterweise ist die Plattenstärke 31 identisch zu der Plattenstärke, die ein Ausgangswerkstück aufwies, bevor aus dem Ausgangswerkstück das Übertragungselement 10 gefertigt wurde. Auf diese Weise ist es nicht erforderlich, dieses Maß am Übertragungselement 10 zu ändern. Lediglich die Dimensionierung der Ausnehmung 2 muss auf die Plattenstärke 31 eingestellt werden.

Fig. 4 zeigt das Übertragungselement 10 mit Spindelmutter 5 und dem Nachstellring 12 in formschlüssiger Betriebsposition. Dabei ist erkennbar, dass die Ausnehmung 2 nicht notwendigerweise über die gesamte Ausnehmungslänge 25 die Ausnehmungsbreite 27 aufweisen muss, sondern im Ganzen tropfenförmig ausgebildet ist, sodass der Zuganker 16 nur im Anschlag mit der Ausnehmung 2 in den gewünschten Hintergriff beziehungsweise Formschluss zu bringen ist. Ferner ist es denkbar, dass der Zuganker 16 und/oder die Ausnehmung 2 bei der 90 Grad-Drehung zur Installation des Übertragungselementes 10 dabei geringfügig plastisch verformt werden/wird, um die betriebsgemäße Position vorübergehend, zumindest während der Herstellung, zu fixieren und zu sichern. Damit ist alternativ auch möglich, dass das Übertragungselement 10 eine Baugruppe zusammen mit dem Nachstellring 12 bildet, bei der gegebenenfalls die Spindelmutter 5 nachträglich auf die Spindelwelle 3 aufgezogen wird oder alternativ der als Lasche ausgebildete erste Flansch 14 kein Rundloch (wie gezeigt), sondern ein Langloch aufweist.

Fig. 5 zeigt das Übertragungselement 10 mit der Spindelmutter 5, wobei zu erkennen ist, dass die Spindelmutter 5 keilförmig ausgebildet ist, sodass sie im ersten Flansch 14, der V-artig ausgebildet ist, eine hervorragende Verdrehsicherung erfährt.

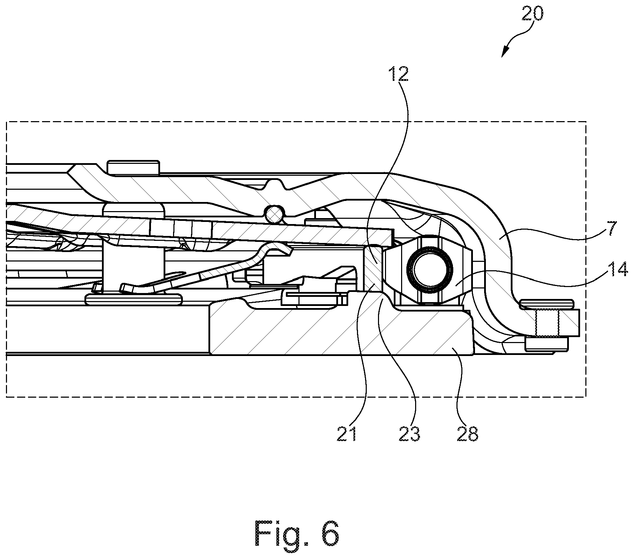

Fig. 6 zeigt eine in Radialrichtung geschnittene Reibkupplung mit einem Kupplungsdeckel 7, der den Nachstellring 12 und den Spindeltrieb 1 abdeckt.

Weiter ist zu erkennen, dass die Anpressplatte 28 keine besonderen Nuten oder Ausnehmungen aufweist, um eine weggesteuerte Nachstelleinrichtung mit Spindeltrieb 1 teilweise aufzunehmen. Der Nachstellring 12 weist erste Rampen 21 auf, die auf zweiten Rampen 23 der Anpressplatte 28 aufliegen, womit die axiale Abstandsänderung der Anpressplatte 28 zum nicht abgebildeten Reibbelag bei entsprechendem Verschleiß hergestellt wird.

Zusammenfassend betrifft die Erfindung einen Spindeltrieb 1 für eine weggesteuerte Nachstelleinrichtung aufweisend eine Spindelwelle 3, eine Spindelmutter 5, ein Antriebsritzel 6, eine Antriebsklinke, eine Aufnahme 9 für die Spindelwelle 3 und ein Übertragungselement 10, welches dazu vorgesehen ist, eine translatorische Bewegung der Spindelmutter 5 auf einem um eine quer zur Spindelwelle 3 ausgerichtete Rotationsachse 11 verdrehbaren Nachstellring 12 zu übertragen. Zur Vereinfachung der Installation und zur Optimierung der Kupplungsbauteile wird vorgeschlagen, einen Zuganker 16 des betriebsgemäß angeordneten Übertragungselements in einer Ausnehmung 2 des Nachstellrings 12 einzulegen und zusammen mit der Ausnehmung 2 einen formschlüssigen Eingriff 17 zu bilden. Damit ist eine Fügung oder anderweitige Befestigung des Übertragungselements 10 nicht erforderlich, wobei zudem eine sehr fliehkraftsichere Anbindung gewährleistet ist. Des Weiteren werden diverse Bauteile der Kupplung vereinfacht.

### Bezugszeichenliste

- 1: Spindeltrieb
- 2: Ausnehmung
- 3: Spindelwelle
- 4: Schneckentrieb
- 5: Spindelmutter
- 6: Antriebsritzel
- 7: Kupplungsdeckel
- 8: Sperrklinke
- 9: Aufnahme
- 10: Übertragungselement
- 11: Rotationsachse
- 12: Nachstellring
- 13: Zwischenstück
- 14: erster Flansch
- 15: Bewegungsrichtung
- 16: Zuganker
- 17: Eingriff
- 18: Nachstellrichtung
- 19: dritte Raumachse
- 20: Reibkupplung
- 21: erste Rampe
- 22: Biegung
- 23: zweite Rampe
- 24: Axialbreite
- 25: Ausnehmungslänge
- 26: Axialbreite
- 27: Ausnehmungsbreite
- 28: Anpressplatte / Gegenelement
- 29: Ankerende
- 30: Ankerende
- 31: Plattenstärke

## Patentansprüche

1. Spindeltrieb (1) für eine weggesteuerte Nachstelleinrichtung, aufweisend zumindest die folgenden Komponenten:
- eine Spindelwelle (3) mit einem Schneckentrieb (4);
- eine Spindelmutter (5), die mittels des Schneckentriebs (4) der Spindelwelle (3) infolge einer Verdrehung der Spindelwelle (3) translatorisch bewegbar ist;
- ein Antriebsritzel (6) zum Antreiben der Spindelwelle (3);
- eine Aufnahme (9) für die Spindelwelle (3), die die Spindelwelle (3) axial fixiert; und
- ein Übertragungselement (10), welches dazu vorgesehen ist, eine translatorische Bewegung der Spindelmutter (5) auf einen um eine quer zur Spindelwelle (3) ausgerichtete Rotationsachse (11) verdrehbaren Nachstellring (12) zu übertragen, wobei ein Zuganker (16) des betriebsgemäß angeordneten Übertragungselementes (10) in einer Ausnehmung (2) des Nachstellringes (12) einliegt und zusammen mit der Ausnehmung (2) einen formschlüssigen Eingriff (17) bildet, wobei bei einer betriebsgemäßen Anordnung das Übertragungselement (10) in Umfangsrichtung (18) entlang des Nachstellrings (12) verläuft und bei einer nicht-betriebsgemäßen Anordnung das Übertragungselement (10) in Axialrichtung der Rotationsache (11) oder in einer Radialrichtung (19) verläuft, **dadurch gekennzeichnet, dass** eine Axialbreite (24) des Zugankers (16) kleiner ist als eine in Umfangsrichtung (18) verlaufende Ausnehmungslänge (25) der Ausnehmung (2), und wenigstens zwei Ankerenden (29,30) des Zugankers (16) bei betriebsgemäßer Anordnung des Übertragungselements (10) in unterschiedliche Axialrichtungen der Rotationsachse (11) weisen.

2. Spindeltrieb (1) nach Anspruch 1, wobei der Zuganker (16) in wenigstens einer nicht-betriebsgemäßen Anordnung des Übertragungselements (10) in die Ausnehmung (2) einlegbar ist.

3. Spindeltrieb (1) nach Anspruch 1 oder 2, wobei eine in Axialrichtung der Rotationsachse (11) verlaufende Ausnehmungsbreite (27) der Ausnehmung (2) größer ist als eine Plattenstärke (31) eines Ausgangswerkstückes des Übertragungselements (10).

4. Spindeltrieb (1) nach einem der vorhergehenden Ansprüche, wobei die Ausnehmung (2) ein teilweise oder vollständig umrandetes Loch im Nachstellring (12) ausbildet.

5. Weggesteuerte Nachstelleinrichtung für eine Reibkupplung (20), aufweisend zumindest die folgenden Komponenten:
- ein verdrehbarer Nachstellring (12) mit zumindest einer ersten Rampe (21);
- ein Gegenelement (28) mit zumindest einer zweiten Rampe (23), wobei das Gegenelement (28) und der Nachstellring (12) mit ihren jeweiligen Rampen (21,23) aufeinander gesetzt eine Gesamthöhe bilden, wobei die Gesamthöhe mittels eines Verdrehens des Nachstellrings (12) mittels der zumindest einen ersten Rampe (21) und der zumindest einen zweiten Rampe (23) veränderbar ist; und
- ein Spindeltrieb (1) nach einem der vorhergehenden Ansprüche, wobei mittels einer translatorischen Bewegung der Spindelmutter (5) und dem Übertragungselement (10) der Nachstellring (12) verdrehbar ist.

6. Reibkupplung (20) mit einer Rotationsachse (11) zum lösbaren Verbinden einer Antriebswelle mit einem Antriebsstrang, aufweisend zumindest die folgenden Komponenten:
- zumindest ein Reibpaket mit zumindest einer Anpressplatte (28) und zumindest einer korrespondierenden Reibscheibe, wobei zwischen der zumindest einen Anpressplatte (28) und der zumindest einen korrespondierenden Reibscheibe zumindest ein verschleißbarer Reibbelag angeordnet ist, und wobei über das Reibpaket im angepressten Zustand mittels des zumindest einen Reibbelags ein Drehmoment übertragbar ist; und
- zumindest eine weggesteuerte Nachstelleinrichtung nach Anspruch 5, die dazu eingerichtet ist, eine Veränderung eines Abstands zwischen der zumindest einen Anpressplatte (28) und der zumindest einen korrespondierenden Reibscheibe bei einer abnehmenden Gesamtdicke des zumindest einen Reibbelags auszugleichen.

7. Kraftfahrzeug, aufweisend eine Antriebseinheit mit einer Abtriebswelle, einen Antriebsstrang und eine Reibkupplung (20) nach Anspruch 6.

## Claims

1. A spindle operation (1) for a path-controlled adjustment device, having at least the following components:
- a spindle shaft (3) with a worm drive (4);
- a spindle nut (5) which can be moved in a translational manner by means of the worm drive (4) of the spindle shaft (3) as a result of a rotation of the spindle shaft (3);
- a drive pinion (6) for driving the spindle shaft (3);
- a receptacle (9) for the spindle shaft (3), which axially fixes the spindle shaft (3); and
- a transmission element (10) which is intended to transmit a translational movement of the spindle nut (5) to an adjustment ring (12) which can be rotated about an axis of rotation (11) oriented transversely to the spindle shaft (3), wherein a tie rod (16) of the transmission element (10) arranged for operation is inserted in a recess (2) of the adjustment ring (12) and forms a positive engagement (17) with the recess (2), wherein in an operational arrangement the transmission element (10) extends in the circumferential direction (18) of the adjustment ring (12) and in a non-operational arrangement the transmission element (10) extends in the axial direction of the axis of rotation (11) or in a radial direction (19), **characterised in that** an axial width (24) of the tie rod (16) is smaller than a length (25) of the recess (2) extending in the circumferential direction (18), and at least two ends (29, 30) of the tie rod (16) point in different axial directions of the axis of rotation (11) in an operational arrangement of the transmission element (10).

2. The spindle operation (1) according to claim 1, wherein the tie rod (16) can be inserted into the recess (2) in at least one non-operational arrangement of the transmission element (10).

3. The spindle operation (1) according to claim 1 or claim 2, wherein a width (27) of the recess (2) extending in the axial direction of the axis of rotation (11) is larger than a plate thickness (31) of an initial workpiece of the transmission element (10).

4. The spindle operation (1) according to any one of the preceding claims, wherein the recess (2) forms a partially or completely rimmed hole in the adjustment ring (12).

5. A path-controlled adjustment device for a friction coupling (20), having at least the following components:
- a rotatable adjustment ring (12) with at least one first ramp (21);
- a counter element (28) with at least one second ramp (23), wherein the counter element (28) and the adjustment ring (12) form a total height with their respective ramps (21, 23) placed on top of one another, wherein the total height can be changed by rotating the adjustment ring (12) by means of the at least one first ramp (21) and the at least one second ramp (23); and
- a spindle operation (1) according to any one of the preceding claims, wherein the adjustment ring (12) can be rotated by means of a translational movement of the spindle nut (5) and the transmission element (10).

6. A friction coupling (20) with an axis of rotation (11) for releasably connecting a drive shaft to a drive train, having at least the following components:
- at least one friction packet with at least one pressure plate (28) and at least one corresponding friction disc, wherein at least one wearable friction lining is arranged between the at least one pressure plate (28) and the at least one corresponding friction disc, and wherein torque can be transmitted via the friction packet in the pressed state by means of the at least one friction lining; and
- at least one path-controlled adjustment device according to claim 5, which is configured to compensate for a change in the distance between the at least one pressure plate (28) and the at least one corresponding friction disc with a decreasing overall thickness of the at least one friction lining.

7. A motor vehicle having a drive unit with an output shaft, a drive train and a friction coupling (20) according to claim 6.

## Revendications

1. Entraînement à broche (1) pour un dispositif de réglage commandé en position, comprenant au moins les composants suivants :
- un arbre de broche (3) avec un entraînement à vis sans fin (4) ;
- un écrou de broche (5) qui peut être déplacé en translation au moyen de l'entraînement à vis sans fin (4) de l'arbre de broche (3) en raison d'une rotation de l'arbre de broche (3) ;
- un pignon d'entraînement (6) pour entraîner l'arbre de broche (3) ;
- un logement (9) pour l'arbre de broche (3) qui fixe axialement l'arbre de broche (3) ; et
- un élément de transmission (10) qui est destiné à transmettre un mouvement de translation de l'écrou de broche (5) à une bague d'ajustement (12) qui peut tourner autour d'un axe de rotation (11) orienté transversalement à l'arbre de broche (3), un tirant (16) de l'élément de transmission (10) disposé de manière fonctionnelle, étant inséré dans un évidement (2) de la bague d'ajustement (12) et forme conjointement avec l'évidement (2) un emboîtement par complémentarité de forme (17), dans une disposition fonctionnelle, l'élément de transmission (10) s'étendant dans la direction circonférentielle (18) le long de la la bague d'ajustement (12) et, dans une disposition non fonctionnelle, l'élément de transmission (10) s'étendant dans la direction axiale de l'axe de rotation (11) ou dans une direction radiale (19), **caractérisé en ce qu'**une largeur axiale (24) du tirant (16) est inférieure à une longueur (25) de l'évidement (2) s'étendant dans la direction circonférentielle (18) et au moins deux extrémités d'ancrage (29, 30) du tirant (16) étant orientées, dans une disposition fonctionnelle de l'élément de transmission (10), dans des directions axiales différentes de l'axe de rotation (11).

2. Entraînement à broche (1) selon la revendication 1, dans lequel le tirant (16) peut être inséré dans l'évidement (2) dans au moins une disposition non fonctionnelle de l'élément de transmission (10).

3. Entraînement à broche (1) selon la revendication 1 ou 2, dans lequel une largeur (27) de l'évidement (2) s'étendant dans la direction axiale de l'axe de rotation (11) est supérieure à une épaisseur de plaque (31) d'une pièce initiale de l'élément de transmission (10).

4. Entraînement à broche (1) selon l'une quelconque des revendications précédentes, dans lequel l'évidement (2) forme un trou partiellement ou complètement bordé dans la bague d'ajustement (12).

5. Dispositif d'ajustement à trajectoire commandée d'un accouplement à friction (20), comprenant au moins les composants suivants :
- une bague d'ajustement rotative (12) avec au moins une première rampe (21) ;
- un contre-élément (28) avec au moins une seconde rampe (23), le contre-élément (28) et la bague d'ajustement (12) avec leurs rampes respectives (21, 23) placés l'un sur l'autre formant une hauteur totale, la hauteur totale pouvant être modifiée par rotation de la bague d'ajustement (12) au moyen de ladite au moins une première rampe (21) et de ladite au moins une seconde rampe (23) ; et
- un entraînement à broche (1) selon l'une quelconque des revendications précédentes, dans lequel la bague d'ajustement (12) peut être tournée au moyen d'un mouvement de translation de l'écrou de broche (5) et de l'élément de transmission (10).

6. Accouplement à friction (20) comprenant un axe de rotation (11) pour relier de manière amovible un arbre d'entraînement à un train d'entraînement, comprenant au moins les composants suivants :
- au moins un ensemble à friction avec au moins une plaque de pression (28) et au moins un disque de friction correspondant, au moins une garniture de friction d'usure étant disposée entre la au moins une plaque de pression (28) et le au moins un disque de friction correspondant et, par l'intermédiaire de l'ensemble à friction à l'état pressé, un couple pouvant être transmis au moyen de l'au moins une garniture de friction ; et
- au moins un dispositif d'ajustement à trajectoire commandée selon la revendication 5, qui est conçu pour compenser un changement d'une distance entre l'au moins une plaque de pression (28) et l'au moins un disque de friction correspondant lorsque l'épaisseur globale de l'au moins une garniture de friction diminue.

7. Véhicule automobile, comprenant une unité d'entraînement avec un arbre entraîné, un train d'entraînement et un accouplement à friction (20) selon la revendication 6.
